# EUROPÄISCHE PATENTSCHRIFT

(11) **EP 2 606 210 B1**
(45) Veröffentlichungstag und Bekanntmachung des Hinweises auf die Patenterteilung: **25.10.2017**
(21) Anmeldenummer: 11749785.9
(22) Anmeldetag: 12.08.2011
(51) Int. Cl.: F01N 3/20, F01N 11/00, F01N 3/08, B01D 53/90, B01D 53/94

(54) **VERFAHREN ZUM BETRIEB EINER ABGASBEHANDLUNGSVORRICHTUNG**
METHOD FOR OPERATING AN EXHAUST GAS TREATMENT DEVICE
PROCÉDÉ DE FONCTIONNEMENT D'UN DISPOSITIF DE TRAITEMENT DE GAZ D'ÉCHAPPEMENT

(30) Priorität: 20.10.2010 DE 102010049070; 18.08.2010 DE 102010034707
(43) Veröffentlichungstag der Anmeldung: 26.06.2013
(73) Patentinhaber: Continental Automotive GmbH, 30165 Hannover (DE)
(72) Erfinder: BRÜCK, Rolf, 51429 Bergisch Gladbach (DE); BAUER, Peter, 53721 Siegburg (DE); HODGSON, Jan, 53840 Troisdorf (DE)
(86) Internationale Anmeldenummer: PCT/EP2011/063912
(87) Internationale Veröffentlichungsnummer: WO 2012/022687

(56) Entgegenhaltungen:
- EP-A1- 2 357 334
- EP-A2- 2 180 157
- WO-A1-2006/003868
- WO-A1-2008/138682
- DE-A1-102007 040 439
- DE-A1-102008 042 763
- US-A1- 2007 204 600
- US-A1- 2010 024 390

## Beschreibung

Die Erfindung betrifft ein Verfahren zum Betrieb einer Abgasbehandlungsvorrichtung für eine Verbrennungskraftmaschine mit zumindest einem Speicher und zumindest einer Zuführungseinrichtung für ein Reduktionsmittel.

Zur Reduzierung der Schadstoffe in den Abgasen von Verbrennungskraftmaschinen werden seit langem Abgasbehandlungsvorrichtungen eingesetzt. Dabei sind auch Abgasbehandlungsvorrichtungen mit einer Zufuhr für ein Additiv (Kraftstoff, Sauerstoff, Harnstoff, etc.) vorgeschlagen worden, um Schadstoffe im Abgas einer Verbrennungskraftmaschine mit diesem Additiv wirkungsvoll zu reduzieren.

Es hat sich herausgestellt, dass es insbesondere bei mager betriebenen Verbrennungskraftmaschinen vorteilhaft sein kann, dem Abgas ein Reduktionsmittel zuzuführen. Mager betriebene Verbrennungskraftmaschinen werden mit einem Kraftstoff-Luft-Gemisch betrieben, bei welchem mehr Luft zugeführt wird als für die vollständige Umsetzung des zugeführten Kraftstoffes notwendig ist. Derartige Verbrennungskraftmaschinen sind insbesondere moderne Diesel-Motoren.

Insbesondere der Anteil an Stickoxidverbindungen (NOₓ) im Abgas ist bei mager betriebenen Verbrennungskraftmaschinen erhöht und kann in Verbindung mit einem Reduktionsmittel in einer Abgasbehandlungsvorrichtung reduziert werden. Man spricht vom Verfahren der selektiven katalytischen Reduktion (SCR-Verfahren).

Als Reduktionsmittel kann beispielsweise Ammoniak verwendet werden. Ammoniak wird mit den Stickoxidverbindungen im Abgas in unschädliche Bestandteile, nämlich in Stickstoff, sowie Wasser und Kohlendioxid, umgesetzt. Ammoniak wird im Kraftfahrzeug normalerweise nicht direkt bevorratet. Normalerweise wird ein Reduktionsmittelvorläufer, der bedarfsgerecht in das eigentliche Reduktionsmittel umgesetzt wird, bevorratet und/oder zugeführt. Als derartiger Reduktionsmittelvorläufer kann beispielsweise Harnstoff dienen. Besonders bevorzugt ist eine wässrige Harnstofflösung. Eine derartige wässrige Harnstofflösung mit einem Harnstoffgehalt von 32,5 % ist beispielsweise unter dem Handelsnamen AdBlue® erhältlich.

Ein Reduktionsmittel kann einer Abgasbehandlungsvorrichtung einer Verbrennungskraftmaschine flüssig und/oder gasförmig zugeführt werden. Normalerweise wird das Reduktionsmittel in einem Kraftfahrzeug flüssig gelagert. Eine derartige flüssige Lagerung ist besonders platzsparend möglich. Dies bedeutete jedoch auch, dass vor bzw. bei der Zugabe des flüssigen Reduktionsmittels eine Verdampfung erfolgt, insbesondere auch im Bereich der Abgasbehandlungsvorrichtung. Bei dieser Verdampfung ist besonders wichtig, dass eine rasche und möglichst vollständige Verdampfung sowie eine gleichmäßige Verteilung im Abgas bzw. der Abgasbehandlungsvorrichtung erreicht werden. Gerade flüssige Ablagerungen an den (strömungstechnisch für das Abgas schwer erreichbaren) Bereichen der Abgasleitung können zu ungewünschten Korrosionen oder dergleichen führen. Zudem steht so nicht die gesamte Menge des Reduktionsmittels der Umsetzung der Stickoxide zur Verfügung und ein größerer Verbrauch an Reduktionsmittel ist sonst ebenfalls zu verzeichnen.

Hiervon ausgehend ist es Aufgabe der hier vorliegenden Erfindung, die im Zusammenhang mit dem Stand der Technik geschilderten technischen Probleme weiter zu lindern. Es soll insbesondere ein Verfahren zum Betrieb einer Abgasbehandlungsvorrichtung vorgeschlagen werden, welches auch bei sehr häufigen Lastwechseln der Verbrennungskraftmaschine eine sichere Umwandlung von Stickoxiden nach dem SCR-Verfahren ermöglicht. Zudem soll eine besonders effektive und energetisch günstige Zugabestrategie für das Reduktionsmittel angegeben werden, wobei insbesondere abgasinterne Reduktionsmittelzwischenspeicher mit entsprechend geringem Aufwand mit Reduktionsmittel versorgt werden.

Die DE-A1-10 2007 040 439 offenbart ein Verfahren zur Diagnose eines Abgasbehandlungssystems mit einem SCR-Katalysator, der eine Speicherkapazität für Ammoniak aufweist. Durch das Vefahren soll ein Fehlverhalten des Abgasbehandlungssystems erkannt werden. Bei dem Verfahren wird ein Abgassensor verwendet, welcher stromabwärts des SCR-Katalysators angeordnet ist. Eine besondere Strategie zur Zugabe von Ammoniak in die Speicherkapazität des SCR-Katalysators mit besonders geringem Aufwand ist nicht offenbart.

Die EP-A2-2 180 157 betrifft ein Verfahren zur Zugabe eines Reduktionsmittels zu einem Abgasbehandlungssystem. In dem Abgasbehandlungssystem ist auch eine Speicherkapazität für Ammoniak angeordnet. Eine zu dem Abgasbehandlungssystem zudosierte Menge an Harnstoff-Wasser-Lösung wird so angepasst, dass in der Speicherkapazität eine bestimmte Menge an Ammoniak eingespeichert ist. Eine besondere Strategie zur Reduzierung des Aufwandes bei der Zugabe von Harnstoff-Wasser-Lösung zu dem Abgasbehandlungssystem ist nicht offenbart.

Die EP-A1-2 357 334 offenbart ebenfalls eine Abgasbehandlungsvorrichtung mit einem SCR-Katalysator, der eine Speicherfähigkeit für Ammoniak aufweist. Hier ist schwerpunktmäßig die Diagnose der Dosiergenauigkeit einer Vorrichtung zur Zugabe von Reduktionsmittel zu einer Abgasbehandlungsvorrichtung beschrieben. Details zu einer Strategie zur Zugabe von Harnstoff-Wasser-Lösung zu dem Abgasbehandlungssystem mit besonders geringem Aufwand sind auch hier nicht offenbart.

Diese Aufgaben werden gelöst mit einem Verfahren gemäß den Merkmalen des Patentanspruchs 1. Weitere vorteilhafte Ausgestaltungen des Verfahrens sind in den abhängig formulierten Patentansprüchen angegeben. Die in den Patentansprüchen einzeln aufgeführten Merkmale sind in beliebiger, technologisch sinnvoller, Weise miteinander kombinierbar und können durch erläuternde Sachverhalte aus der Beschreibung ergänzt werden, wobei weitere Ausführungsvarianten der Erfindung aufgezeigt werden.

Das erfindungsgemäße Verfahren zum Betrieb einer Abgasbehandlungsvorrichtung mit zumindest einem Speicher für ein Reduktionsmittel und zumindest einer Zuführungseinrichtung für ein Reduktionsmittel umfasst zumindest die folgenden Schritte:
a) Prüfen eines Füllstands des zumindest einen Speichers;
b) Prüfen eines aktuellen Abgasmassenstroms, wobei geprüft wird, wieviel Abgas aktuell durch die Abgasbehandlungsvorrichtung strömt;
c) Zuführen von Reduktionsmittel nur dann, wenn der Füllstand des zumindest einen Speichers unterhalb eines Füllstandminimums liegt und der in Schritt b) festgestellte Abgasmassenstrom in einem Niedriglastbereich liegt,
wobei die Abgasbehandlungsvorrichtung wenigstens eine Heizung aufweist und wobei das Verfahren weiter umfasst:
- Prüfen der Abgastemperatur vor Schritt c);
- Heizen zumindest des Abgasstroms oder des Reduktionsmittels mit der wenigstens einen Heizung vor, während oder nach Schritt c), wenn die Abgastemperatur unterhalb einer minimalen Grenztemperatur liegt und eine Zufuhr von Reduktionsmittel erfolgt.

Die Abgasbehandlungsvorrichtung wird insbesondere mit einer Abgasleitung gebildet, durch die das von einer Verbrennungskraftmaschine erzeugte Abgas hindurch geleitet wird. In der Abgasbehandlungsvorrichtung ist folglich ein Speicher für das Reduktionsmittel so positioniert, dass das mittels der Zuführeineinrichtung abgegebene Reduktionsmittel zumindest teilweise diesen Speicher erreicht. Dabei kann der Speicher in Strömungsrichtung und/oder entgegen der Strömungsrichtung mit dem Reduktionsmittel beaufschlagt werden; gegebenenfalls können auch mehrere Speicher und/oder Zuführeineinrichtungen vorgesehen sein. Die Zuführeineinrichtung umfasst zumeist eine Düse bzw. einen Injektor, so dass das (flüssige) Reduktionsmittel (meist fein dispers) mit einem Überdruck in die Abgasleitung zugegeben werden kann. Das Verfahren betrifft nun den Betrieb einer solchen Abgasbehandlungsvorrichtung.

Die einzelnen Verfahrensschritte des erfindungsgemäßen Verfahrens werden während des Betriebs einer Verbrennungskraftmaschine normalerweise in der hier angegebenen Reihenfolge nach Art einer Schleife iterativ wiederholt.

Der Begriff Reduktionsmittel wird hier als Oberbegriff sowohl für ein Reduktionsmittel (wie z. B. Ammoniak) als auch für einen Reduktionsmittelvorläufer, wie beispielsweise Harnstoff bzw. wässrige Harnstofflösung, verwendet.

Das erfindungsgemäße Verfahren zeichnet sich dadurch aus, dass Reduktionsmittel erst infolge der Überprüfung des Füllstands des zumindest einen Speichers und des Prüfens eines aktuellen Abgasmassenstroms erfolgt.

In dem Speicher der Abgasbehandlungsvorrichtung wird eine Menge an Reduktionsmittel zwischengespeichert. Damit wird insbesondere erreicht, dass bereits im Abgasstrom eine gewisse Menge an Reduktionsmittel eingelagert wird, die dann, wenn die entsprechenden Umgebungsbedingungen im Abgassystem vorliegen, (gleichmäßig) an das Abgas zur Reaktion mit den vorliegenden Abgasbestandteilen abgegeben wird. Ein Speicher zur Zwischenspeicherung einer Menge an Reduktionsmittel kann bspw. eine Speicherbeschichtung an einem vom Abgas kontaktierten Träger (z. B. einem Wabenkörper) sein, die in der Lage ist, Ammoniak insbesondere in einem bestimmten Temperaturbereich zu speichern. Ein derartiger Speicher kann auch zusammen mit der zur selektiven katalytischen Reduktion vorgesehenen Beschichtung in einem Wabenkörper vorgesehen sein. Dies ist auch in Form einer gemischten Beschichtung möglich, die sowohl Ammoniak speichernde Anteile, als auch diese selektive katalytische Reduktion unterstützende Anteile aufweist. Ein derartiger Speicher ist bevorzugt in der Lage, bspw. für einen Betriebszeitraum zwischen 1 Minute und 1 Stunde, vorzugsweise zwischen 5 und 30 Minuten, ausreichend Reduktionsmittel zu speichern, damit die selektive katalytische Reduktion in der Abgasbehandlungsvorrichtung ohne erneute Zufuhr von Reduktionsmittel erfolgen kann.

Durch eine derartige Zwischenspeicherung von Reduktionsmittel in der Abgasbehandlungsvorrichtung kann erreicht werden, dass besonders günstige Zeitpunkte zur Zufuhr/Verdampfung von Reduktionsmittel verwendet werden können, ohne dass dies immer mit dem tatsächlichen Bedarf an Reduktionsmittel in der Abgasbehandlungsvorrichtung exakt abgestimmt sein muss.

Die in einem Speicher aktuell gespeicherte Menge an Reduktionsmittel kann mit geeigneten Sensoren bestimmt und/oder berechnet werden. Die gespeicherte Menge kann bspw. mit einem kapazitiven Sensor gemessen werden, der in den Speicher eingelassen ist und seine Kapazität in Abhängigkeit der gespeicherten Menge an Reduktionsmittel ändert. In ähnlicher Weise sind auch resistive und induktive Sensoren denkbar, die eine Änderung des elektrischen bzw. magnetischen Widerstands in Abhängigkeit von der gespeicherten Menge an Reduktionsmittel registrieren. Auch denkbar ist ein kalorischer Sensor, der die Wärmekapazität im Speicherraum entweder durch erhöhten Strombedarf bei konstanter Temperatur oder verringerter Temperatur bei konstantem Strombedarf registriert. Ebenso ist möglich, dass das Verhalten der Abgasbehandlungsvorrichtung in Abhängigkeit der jeweils aktuellen Lastzustände der Verbrennungskraftmaschine bekannt ist bzw. rechnerisch bestimmt werden kann, so dass zum Beispiel Kennfelder vorliegen, anhand der die Einlagerung und Auslagerung des Reduktionsmittels berechenbar ist. Dann kann der Füllstand auch aus diesen Berechnungen ermittelt und für die Prüfung herangezogen werden.

Zudem wird hier geprüft, wie viel Abgas aktuell durch die Abgasbehandlungsvorrichtung strömt. Der Abgasmassenstrom kann durch verschiedenste Messmittel geprüft werden. Zum einen eignen sich besonders strömungsbasierte Messmittel, wie Propeller und Prandtl'sche Röhren (Druckdifferenz zwischen Staudruck und Umgebungsdruck) und zum anderen Messmittel auf Basis von Wärmekapazitäten, wie Anemometer und Kaloriemeter. Um hier aber den apparativen Aufwand gering zu halten, kann der aktuelle Abgasmassenstrom auch berechnet werden. Hierfür können die bekannten bzw. gemessenen Parameter (Luftzufuhr, Kraftstoffzufuhr, Lastzustand etc.) herangezogen werden, so dass mit ausreichender Genauigkeit der tatsächlich in der Abgasleitung vorliegende Abgasmassenstrom ermittelt und geprüft werden kann.

Das erfindungsgemäße Verfahren zeichnet sich dadurch aus, dass ein Reduktionsmittel nur dann zugeführt wird, wenn der Füllstand, der wie obig beschrieben, ermittelt wird, unterhalb eines Füllstandminimums liegt. Bei einer technisch sinnvollen Ausführung eines Speichers für Reduktionsmittel ist es nicht notwendig, dass der Speicher zu jedem Zeitpunkt maximal gefüllt ist. Vielmehr ist der Speicher in sinnvoller Weise so ausgelegt, dass ein Füllstand von 50 % bis 70 % für einen mittelfristigen Betrieb ausreicht. Das Füllstandminimum liegt dann bspw. bei 20 % oder bevorzugt 30 %, so dass auf der einen Seite gewährleistet wird, dass stets Reduktionsmittel im Speicher vorhanden ist, und auf der anderen Seite keine unnötig kurzen Zeitabstände zwischen den Zuführschritten von Reduktionsmittel unternommen werden müssen. Der geeignete Wert für ein Füllstandminimum hängt also von der zu filternden Abgasmenge und der Auslegung des Speichers im Zusammenhang mit der Abgasbehandlungsvorrichtung ab.

Gleichzeitig kann auch sichergestellt werden, dass kein Durchbruch von Reduktionsmittel auftritt. Ein Durchbruch von Reduktionsmittel bedeutet, dass Reduktionsmittel aus dem Abgassystem hinaus gelangt. Als Reduktionsmittel wird häufig Ammoniak bzw. ein Ammoniakvorläufer verwendet. In einem Speicher eingespeichert wird normalerweise Ammoniak. Ein unerwünschter Durchbruch kann passieren, wenn keine ausreichende Speicherkapazität für zugeführtes Reduktionsmittel in dem Abgassystem existiert und gleichzeitig mehr Reduktionsmittel im Abgas zur Verfügung steht, als für die Umsetzung der vorhandenen Schadstoffe notwendig ist, und/oder die Umsetzung von Schadstoffen mit dem Abgas nicht richtig funktioniert. Die Umsetzung kann beispielsweise nicht funktionieren oder reduziert sein, wenn die Temperatur unterhalb einer Starttemperatur bzw. einer Schwelltemperatur für eine katalytische Reduktion liegt.

Bei einer Temperaturerhöhung sinkt häufig auch die Speicherkapazität eines Reduktionsmittelspeichers. Dies ist durch die Eigenschaften eines Speichers bedingt. Aus diesem Grund kann eine prozentuale Speichermenge an Reduktionsmittel in einem Reduktionsmittelspeicher bei steigender Temperatur stark ansteigen, obwohl die absolute Speichermenge konstant ist. Plötzliche Temperaturerhöhungen können in einem Kraftfahrzeug jederzeit auftreten, beispielsweise wenn auf eine Niedriglastphase eine Hochlastphase folgt. Um auch in einer solchen Situation noch ausreichend Speicherkapazität zur Verfügung zu haben, sollte ein Ammoniakspeicher nicht vollständig aufgefüllt werden. Insbesondere ist ein Speichergehalt von 30 % bis 40 % im Niedriglastbereich vorteilhaft, um effektiv Speichergehaltsspitzen während möglicher Hochlastphasen mit sehr hohen Abgastemperaturen abzufangen.

Bei der Entscheidung für einen geeigneten prozentualen Speichergehalt nach einem Befüllvorgang des Speichers kann auch zumindest einer der folgenden Parameter berücksichtigt werden:
- vorliegende Temperatur in einer Abgasrückführleitung,
- vorliegende Drehzahl des Motors,
- vorliegende Last des Motors, und
- vorliegender Abgasmassenstrom.

Alle diese Parameter charakterisieren den Lastzustand einer Verbrennungskraftmaschine, wobei dieser besonders genau charakterisiert ist, wenn mehrere dieser Parameter berücksichtigt werden. Wenn der Lastzustand der Verbrennungskraftmaschine bei der Zufuhr des Reduktionsmittels besonders genau bekannt ist, kann auch die mögliche Steigerung des Befüllgrades des Speichers aufgrund einer Temperaturerhöhung abgeschätzt werden. Prozentual gesehen kann ein Speicher stärker befüllt werden, wenn die Last der Verbrennungskraftmaschine während des Befüllvorganges schon erhöht ist, weil eine mögliche weitere Steigerung der Last dann geringer ausfällt als bei einer sehr geringen Ausgangslast.

Bei der Entscheidung für einen geeigneten prozentualen Speichergehalt nach einem Befüllvorgang kann auch eine Koppelung mit einem Stickstoffoxid-Rohmassenmodell von dem angeschlossenen Verbrennungsmotor erfolgen. In einem Stickstoffoxid-Rohmassenmodell wird ein Stickstoffoxid-Rohemissionsstrom vor einem Speicherkatalysator aus den Betriebsparametern der Verbrennungskraftmaschine und insbesondere aus dem vorliegenden Kraftstoff-Luft-Verhältnis berechnet. Das Kraftstoff-Luft-Verhältnis hat maßgeblichen Einfluss auf den Rohemissionsstrom. Der Rohemissionsstrom stellt wiederum einen weiteren wichtigen Einfluss auf die Speicherfähigkeit eines Reduktionsmittelspeichers in einem Abgassystem dar.

Eine weitere Bedingung des erfindungsgemäßen Verfahrens für das Zuführen von Reduktionsmittel ist, dass der Abgasmassenstrom in einem Niedriglastbereich liegt. Während des Niedriglastbereiches liegt eine insbesondere gegenüber einem Fahrbetrieb der Verbrennungskraftmaschine reduzierte Last bzw. ein reduzierter Abgasmassenstrom vor. Solche Niedriglastbereiche sind insbesondere während des Leerlaufs und/oder des Schubbetriebes anzutreffen. Insbesondere umfasst ein solcher Niedriglastbereich den Betrieb eines Kraftfahrzeugs in der Stadt (innerstädtischer Betrieb), während dessen Stop-and-Go und/oder insgesamt niedrige Geschwindigkeiten vorherrschend sind.

Bei typischen Verbrennungskraftmaschinen, wie sie beispielsweise in Kraftfahrzeugen eingesetzt werden, sind Niedriglastbereiche beispielsweise durch Drehzahlen zwischen 600 und 1200 l/min [Umdrehungen pro Minute] und Massenströme zwischen 20 und 200 kg/h [Kilogramm pro Stunde] gekennzeichnet.

Es wurde herausgefunden, dass gerade die Bedingungen während dieses Niedriglastbereichs für ein Verdampfen und Auffüllen des Speichers geeignet sind. Der geringe Abgasmassenstrom in dieser Phase ermöglicht, dass eine Wärmezufuhr hin zum Reduktionsmittel durch externe (elektrisch betriebene Heizer) verbessert und/oder eine nahezu vollständige Zugabe des Reduktionsmittels hin zum Speicher erreicht werden. So ist eine besonders wirtschaftliche Zugabe des Reduktionsmittels zur Abgasbehandlungsvorrichtung erreicht.

Besonders vorteilhaft ist das erfindungsgemäße Verfahren, wenn vor Schritt c) der in Schritt b) geprüfte aktuelle Abgasmassenstrom mit einem Energiemodell ausgewertet wird, um festzulegen, ob in Schritt c) Reduktionsmittel zugeführt wird bzw. zugeführt werden soll.

Weiterhin vorteilhaft ist das erfindungsgemäße Verfahren, wenn vor Schritt c) der in Schritt b) geprüfte aktuelle Abgasmassenstrom sowie ein geprüfter Einflusswert einer Heizung mit einem Energiemodell ausgewertet werden, um festzulegen, ob in Schritt c) zumindest eine der folgenden Aktionen durchgeführt wird:
- Heizen zumindest des Abgasstromes oder des Reduktionsmittels, und
- Zuführen von Reduktionsmittel.

Darüber hinaus kann in dem Energiemodell eine Energiemenge mit berücksichtigt werden, die aufgrund von zumindest einer chemischen oder physikalischen Reaktion entsteht, wenn eine Menge an Reduktionsmittel zugeführt wird.

In einem Energiemodell werden eine oder mehrere Komponenten einer Vorrichtung gemeinsam oder eine gesamte Vorrichtung als Energiespeicher betrachtet. Das Energiemodell kann beispielsweise für eine Abgasbehandlungsvorrichtung oder für einen Abschnitt einer Abgasbehandlungsvorrichtung aufgestellt werden. Der Energiespeicher kann auch als System bezeichnet werden. Dieser Energiespeicher wird von einer Energiemodellgrenze oder auch Systemgrenze begrenzt. Alle Energieströme, die über diese Systemgrenze hinweg in den Energiespeicher hinein oder aus dem Energiespeicher hinaus strömen, werden im Rahmen des Systemsmodells betrachtet und insbesondere aufsummiert. Insgesamt kann so auf die Veränderung einer im Energiespeicher gespeicherte Energiemenge geschlossen werden. Diese gespeicherte Energiemenge kann auch als innere Energie bezeichnet werden. Die einströmenden Energieströme vergrößern dabei die gespeicherte Energiemenge. Die ausströmenden Energieströme verkleinern die gespeicherte Energiemenge.

Energieströme, die in den Energiespeicher eintreten oder aus diesem Energiespeicher austreten, können unterschiedlicher Art sein. Grundsätzlich zu unterscheiden ist zwischen massengebundenen Energieströmen und massenungebundenen Energieströmen. Ein massengebundener Energiestrom ist beispielsweise die mit einem Abgasmassenstrom in eine Abgasbehandlungsvorrichtung gelangende Wärmeenergie des Abgases. Ein massenungebundener Energiestrom ist beispielsweise eine elektrische Heizleistung einer Heizvorrichtung in einer Abgasbehandlungsvorrichtung, mit welcher das Abgas aufgeheizt werden kann. Die Energie in massengebundenen Energieströmen ist häufig im Wesentlichen durch den thermodynamischen Zustand des Massenstromes des Abgases und/oder Reduktionsmittels selbst bedingt, der durch die Temperatur, die Entropie, den Druck, das spezifische Volumen und den Aggregatzustand des Massenstromes gekennzeichnet ist. Eine weitere Form eines massengebundenen Energiestromes ist ein Massenstrom, welcher chemische Energie beinhaltet, welche innerhalb des Energiespeichers bzw. des Systems umgesetzt werden kann.

Hierbei ist darauf hinzuweisen, dass ein Reduktionsmittelmassenstrom bzw. ein Reduktionsmittelvorläufermassenstrom durch Umsetzung oder Einlagerung in einen Reduktionsmittelspeicher Energie aufnimmt oder freisetzt. Weiterhin beinhaltet ein Abgasmassenstrom Schadstoffkomponenten (insbesondere Stickstoffoxidverbindungen und/oder Kohlenstoffverbindungen). Diese sind zum Teil auf eine unvollständige Verbrennung zurück zu führen. In diesen Schadstoffkomponenten ist noch chemische Energie enthalten, die durch eine katalytische Umsetzung der Schadstoffkomponenten in einer geeigneten Abgasbehandlungsvorrichtung freigesetzt werden kann.

Durch ein Energiemodell kann bereits vor einer Reduktionsmittelzugabe bestimmt werden, ob unter den vorliegenden Bedingungen Reduktionsmittel zugeführt werden kann und dabei eine gewünschte, vorzugsweise vollständige, Umsetzung und/oder Einlagerung in einen Speicher erfolgt. Dazu können in einem Energiemodell die zukünftig zu erwartenden in den Energiespeicher des Energiemodells eintretenden Energieströme sowie die aus dem Energiespeicher austretenden Energieströme und die in dem Energiespeicher zur Einlagerung des Reduktionsmittels benötigte und/oder freiwerdende Energiemenge prognostiziert werden. Beispielsweise kann dann eine prognostizierte innere Energie des Energiespeichers verwendet werden, um festzustellen, ob eine Umsetzung und/oder Einlagerung in der gewünschten Weise erfolgt. Dazu kann beispielsweise die prognostizierte innere Energie direkt mit einer für die zuzuführende Reduktionsmittelmenge notwendige innere Energie verglichen werden.

Ein Energiemodell ist vorzugsweise in einem Steuergerät hinterlegt (z. B. nach Art eines Datenverarbeitungsprogrammes), in welchem die beschriebenen Berechnungen bzw. Vergleiche ablaufen. In dem Steuergerät sind dabei verschiedene Vereinfachungen des Energiemodells möglich. Beispielsweise ist es möglich, dass in dem Steuergerät die Energieströme an sich gar nicht verrechnet werden, sondern lediglich eine Verrechnung von Ersatzgrößen erfolgt, die die Energieströme repräsentieren. Ersatzgrößen können beispielsweise die Temperaturen einzelner Massenströme sein.

Darüber hinaus weist die Abgasbehandlungsvorrichtung wenigstens eine Heizung auf und das Verfahren umfasst weiter die Schritte:
- Prüfen der Abgastemperatur vor Schritt c);
- Heizen zumindest des Abgasstroms oder des Reduktionsmittels mit der wenigstens einen Heizung, wenn die Abgastemperatur unterhalb einer minimalen Grenztemperatur liegt.

Flüssiges Reduktionsmittel muss, bevor es mit den Stickoxiden im Abgas reagieren kann, zunächst verdampft werden. Bei der flüssigen Zufuhr von Reduktionsmittel ist bevorzugt, dass die Verdampfung des Reduktionsmittels in der Abgasbehandlungsvorrichtung erfolgt.

Bei modernen Verbrennungskraftmaschinen liegen im Niedriglastbereich oft so niedrige Abgastemperaturen vor, dass eine Verdampfung des Reduktionsmittels nur mit Hilfe der Wärme des Abgases nicht immer vollständig erreicht werden kann. Bei flüssiger Zufuhr von Reduktionsmittel zum Abgas kann das Reduktionsmittel das Abgas gegebenenfalls noch weiter abkühlen und damit gegebenenfalls auch die nachgelagerten (temperaturempfindlichen) katalytisch aktiven Abgasbehandlungskomponenten. Die Umsetzung der Schadstoffe in einer Abgasbehandlungsvorrichtung hängt vorrangig auch von der Temperatur der Abgase ab. Die meisten Umsetzungsvorgänge von Schadstoffen, wie beispielsweise Stickoxid, Kohlenmonoxid und/oder Rußpartikel (Kohlenstoffpartikel), laufen bei hohen Abgastemperaturen erheblich schneller ab als bei niedrigen Abgastemperaturen. Unterhalb spezifischer Grenztemperaturen, die für verschiedene Umsetzungsvorgänge unterschiedlich sind, laufen bestimmte Umsetzungsvorgänge überhaupt nicht mehr ab.

Aus den vorgenannten Gründen ist es insbesondere bei Abgasbehandlungsvorrichtungen für mager betriebene Verbrennungskraftmaschinen bevorzugt, in den Abgasbehandlungsvorrichtungen wenigstens eine (regelbare) Heizung vorzusehen. Eine solche Heizung kann beispielsweise in Form einer Heizspirale, die in der Abgasleitung montiert ist, eingerichtet sein. Bevorzugt ist jedoch die Ausgestaltung einer Heizung nach Art eines elektrisch beheizbaren Wabenkörpers, bei welchem Pakete aus mehreren zumindest teilweise strukturierten metallischen Folien von einem elektrischen Strom durchflossen werden. Derartige elektrisch beheizbare Wabenkörper haben den Vorteil, dass diese eine wesentlich größere Oberfläche aufweisen, über welche sie die erzeugte Wärme an das Abgas bzw. das Reduktionsmittel abgeben können.

Der Betrieb derartiger elektrisch beheizbarer Wabenkörper ist gezielt zu veranlassen, weil diese Strom verbrauchen. Es sind deshalb Strategien erforderlich, mit welchen ein elektrischer Heizer in einem Abgassystem derart betrieben werden kann, dass er zur vorteilhaften Umsetzung der Abgase bzw. des Reduktionsmittels in der Abgasbehandlungsvorrichtung einerseits beiträgt und andererseits einen möglichst geringen Energieverbrauch aufweist.

Während der Zufuhr von Reduktionsmittel sind regelmäßig erhöhte Temperaturen notwendig. Dies liegt daran, dass das zugeführte Reduktionsmittel bzw. der zugeführte Reduktionsmittelvorläufer regelmäßig in ein Gas bzw. in Dampf überführt bzw. umgesetzt werden muss. Beispielsweise kommt als Reduktionsmittelvorläufer eine Harnstoff-Wasser-Lösung zum Einsatz, die im Abgassystem in Ammoniak umgesetzt werden muss. Verschiedene chemische Vorgänge können zur Umsetzung des Reduktionsmittels ablaufen.

Einer dieser Vorgänge ist die Hydrolyse in einem Hydrolyse-Katalysator. Dabei wird das Reduktionsmittel unter dem Einfluss einer katalytisch wirkenden Hydrolyse-Beschichtung in Ammoniak umgesetzt. Hierzu sind Temperaturen im Abgas oberhalb einer Schwelltemperatur notwendig, die häufig oberhalb von ca. 150 °C, oder sogar bei ca. 200 °C liegen. Die zur Hydrolyse einer Harnstoff-Wasser-Lösung notwendige Temperatur kann gegebenenfalls noch durch die Anwesenheit von Ammoniak [NH₃] und Stickstoffdioxid [NO₂] herabgesetzt sein. Gegebenenfalls sind dann für die Hydrolyse nur Temperaturen zwischen 130 °C und 160 °C notwendig.

Ein weiterer chemischer Vorgang, der zur Umsetzung des Reduktionsmittels führen kann, ist die Thermolyse. Die Thermolyse ist die rein thermische Umsetzung von Reduktionsmittel bzw. Reduktionsmittelvorläufer zu dem endgültigen Reduktionsmittel ohne den Einfluss einer katalytisch wirkenden Hydrolysebeschichtung. Die zur Thermolyse von Reduktionsmittel erforderliche Temperatur ist regelmäßig höher als die zur Hydrolyse notwendige Temperatur. Die zur Hydrolyse notwendige Temperatur hängt maßgeblich von der eingesetzten Hydrolysebeschichtung ab. Damit eine Hydrolyse stattfinden kann, ist gegebenenfalls gar kein eigenständiger Hydrolysekatalysator erforderlich, sondern es kann auch in einer anderen Abgasbehandlungskomponente eine Beschichtung vorgesehen sein, die eine Hydrolyse ermöglicht. Ein Beispiel hierfür ist eine Eisen-Zeolith-Beschichtung. Eine Eisen-Zeolith-Beschichtung kann beispielsweise in einem SCR-Katalysator zur Umsetzung von Stickstoffoxid mit dem Reduktionsmittel vorliegen. Diese Umsetzungsreaktion wird durch die Eisen-Zeolith-Beschichtung ebenfalls katalysiert. Für den Beginn der Thermolyse von Reduktionsmittelvorläufern gibt es oft keine klare Grenztemperatur. Die Thermolyse findet in einem weiten Temperaturbereich gleichzeitig mit der Hydrolyse von Reduktionsmittel statt.

Insbesondere ist die minimale Grenztemperatur so gewählt, dass gewährleistet ist, dass flüssiges Reduktionsmittel verdampft. Die Verfahrensführung ist insbesondere dann vorteilhaft, wenn ein Reduktionsmittel nicht chemisch umgesetzt werden muss, um in der Abgasbehandlungsvorrichtung wirksam zu werden, sondern lediglich vom flüssigen Aggregatszustand in den gasförmigen Aggregatszustand überführt werden muss. Bei Reduktionsmittelvorläufern wie bspw. auch Harnstoff-Wasser-Lösungen kann parallel zum Verdampfen auch bereits eine zumindest teilweise Umsetzung durch Thermolyse und/oder Hydrolyse ablaufen.

Das Heizen zum Zwecke der Erreichung einer Abgastemperatur oberhalb der minimalen Grenztemperatur, wie sie oben definiert ist, kann sowohl vor, währenddessen als auch nach Schritt c), sprich dem Zuführen des Reduktionsmittels, stattfinden. Hierbei können insbesondere neben dem Prüfen der Abgastemperatur auch die Ergebnisse der Schritte a) und b) miteinbezogen werden. Wie bereits obig erwähnt, kann die notwendige Temperatur zur Hydrolyse einer Harnstoff-Wasser-Lösung durch die Anwesenheit von Ammoniak und Stickstoffdioxid herabgesetzt werden. Daher kann das Heizen an den Füllstand des zumindest einen Speichers angepasst werden. Insbesondere bedeutet das, dass bei einem niedrigen Füllstand des Speichers die Abgastemperatur durch Heizen weiter angehoben wird, als wenn der Füllstand des Speichers hoch ist.

Vorzugsweise erfolgt während der Zufuhr von Reduktionsmittel und während des Heizvorganges auch eine Überwachung der Heizstrategie mit Hilfe eines Hydrolysemodells. Ein solches Hydrolysemodell kann in Form eines Hydrolysekennfeldes in einem Steuergerät hinterlegt sein. Das Hydrolysemodell kann mit dem Energiemodell verbunden sein, so dass sämtliche Parameter, die in dem Energiemodell berücksichtigt werden, auch in dem Hydrolysemodell berücksichtigt werden können. Mit Hilfe des Hydrolysemodells wird überwacht, ob während des gesamten Heizvorgangs und des gesamten Zufuhrvorgangs jeweils Bedingungen vorliegen, bei denen eine Hydrolyse stattfindet. In einer einfachen Ausführungsform wird überwacht, ob während des gesamten Zufuhrvorgangs in der Abgasbehandlungsvorrichtung eine ausreichend hohe Temperatur vorliegt. So kann sichergestellt werden, dass das Reduktionsmittel umgesetzt wird und keine Ablagerungen von nicht- oder nicht vollständig umgesetztem Reduktionsmittel in der Abgasbehandlungsvorrichtung entstehen. Es erfolgt eine energetische Betrachtung zwecks der Verhinderung von Ablagerungen.

Ein derartiges Hydrolysemodell ist insbesondere vorteilhaft, weil eine unmittelbare Überwachung der vorliegenden Temperatur in einer Abgasbehandlungsvorrichtung häufig nicht derart schnell erfolgen kann, dass ein rechtzeitiger Abbruch der Zufuhr von Reduktionsmittel erfolgt, wenn die Temperaturen zu stark sinken. Dazu sind (preiswerte) Temperatursensoren, die für den Einsatz in Abgasbehandlungsvorrichtungen geeignet sind, vielfach zu träge.

Im Zusammenhang mit dem Energiemodell und der Vermeidung von Ablagerungen von Reduktionsmittel, und insbesondere Harnstoff, ist die Vermeidung von Wasserschlag besonders wichtig. Wasserschlag tritt in einer Abgasbehandlungsvorrichtung auf, wenn diese kurz nach dem Start der Verbrennungskraftmaschine noch sehr kalt ist. Dann kondensiert im Abgas enthaltener Wasserdampf in der Abgasbehandlungsvorrichtung. Ein besonders negativer Effekt von Wasserschlag ist, dass dieser die Reaktionszeiten von Sensoren in einer Abgasbehandlungsvorrichtung (insbesondere von Temperatursensoren und Lambdasonden) stark absenkt. Damit ein thermodynamisches Modell funktioniert, ist es daher vorteilhaft, Wasserschlag zu vermeiden. Dies kann geschehen, wenn eine Heizung in der Abgasbehandlungsvorrichtung während einer Kaltstartphase derart betrieben wird, dass kein Wasserschlag in der Abgasbehandlungsvorrichtung auftritt.

Für ein Energiemodell ist es vorteilhaft, dass die Energieströme genau bekannt sind. Dazu sind insbesondere präzise Messungen der Temperatursensoren erforderlich. Die Genauigkeit der Temperatursensoren kann beträchtlich erhöht werden, wenn Wasserschlag auf die oben beschriebene Weise vermieden wird. Darüber hinaus verändert die Kondensation von Wasserdampf die Energie in einer Abgasbehandlungsvorrichtung erheblich, weil durch die Kondensation erhebliche Mengen an Wärmeenergie frei gesetzt werden. Auch dies verfälscht das Energiemodell und sollte vermieden werden, in dem die Bildung von Wasserschlag generell vermieden wird.

In einer weiteren vorteilhaften Ausbildung des Verfahrens findet das Heizen mit der wenigstens einen Heizung vor oder nach Schritt a) statt, so dass die Abgastemperatur zwischen einer zur Reduktion notwendigen Mindesttemperatur und einer betriebssicheren Höchsttemperatur liegt.

Wie bereits oben erwähnt, ist die zur Reduktion notwendige Mindesttemperatur vor allen Dingen abhängig von dem Vorliegen von gasförmigem Ammoniak. Unter dem Aspekt der Reduzierung der Hydrolysetemperatur bei einem hohen Füllstand des Speichers ist es insbesondere sinnvoll, zunächst den Füllstand des zumindest einen Speichers zu prüfen (Schritt a)) und erst daraufhin zu heizen. Für den Fall, dass der Füllstand des zumindest einen Speichers durch z. B. Berechnen bekannt ist, kann unabhängig von jeglichen verfahrensmäßigen Prüfschritten die Abgastemperatur durch Heizen zwischen der Mindesttemperatur und der Höchsttemperatur gehalten werden. Je nach Auslegung der Abgasbehandlungsvorrichtung und der Heizung sollte stets darauf geachtet werden, dass eine betriebssichere Höchsttemperatur nicht überschritten wird. Hierbei ist insbesondere eine Temperatur gemeint, bei der die in der Abgasbehandlungseinheit gewünschten Prozesse (Verdampfung des Reduktionsmittels und/oder Hydrolyse des Reduktionsmittels und/oder Thermolyse des Reduktionsmittels und/oder Reduktion von Stickoxiden mit dem Reduktionsmittel) selbstständig ablaufen können.

In einer weiteren vorteilhaften Ausbildung des erfindungsgemäßen Verfahrens wird das Reduktionsmittel flüssig zugeführt, wenn die Abgastemperatur mindestens gleich der Siedetemperatur des Reduktionsmittels oder höher ist.

Wenn die Siedetemperatur des Reduktionsmittels erreicht wird, kann das flüssige Reduktionsmittel im Abgas selbstständig verdampfen. In diesem Fall wird keine (weitere) Heizenergie mehr benötigt. Sollte die zugegebene Menge des Reduktionmittels jedoch eine deutliche Abkühlung des (geringen) Abgasmassenstroms bewirken, kann auch zeitgleich noch weiter geheizt werden.

Insgesamt ist aber festzuhalten, dass aufgrund des Heizens während des Niedriglastbereichs ebenfalls besonders effektiv Wärme dem Abgas zugeführt werden kann, da insbesondere eine Kühlung der Heizung durch einen hohen Massenstrom so vermieden werden kann. Im Niedriglastbereich ist der Massenstrom des Abgases niedrig. Die Heizung muss daher im Niedriglastbereich nur eine verhältnismäßig geringe Menge an Abgas aufheizen. Daher ist im Niedriglastbereich die benötigte Heizenergie besonders gering, die zur Aufheizung des Massenstroms und zur Anhebung der Abgastemperatur notwendig ist.

In manchen Fällen ist die Höchsttemperatur, die durch die Heizung erreicht werden kann, nach oben begrenzt. Ist die Abgasstromtemperatur im Niedriglastbereich niedriger als im Normallastbereich, so ist in solchen Fällen die Temperaturdifferenz zwischen dem Abgas und der Höchsttemperatur der Heizung größer. Die erhöhte Temperaturdifferenz führt aber wiederum zu einem schnelleren Aufheizen des Abgases. Daher kann bei niedriger Abgastemperatur und bei begrenzter Höchsttemperatur der Heizung die minimale Grenztemperatur sehr schnell überschritten werden.

In einer weiteren vorteilhaften Ausbildung des erfindungsgemäßen Verfahrens wird das Zuführen von Reduktionsmittel unterbrochen, wenn der Abgasmassenstrom nicht mehr im Niedriglastbereich liegt oder der Füllstand des zumindest einen Speichers oberhalb eines Füllstandsmaximums liegt.

Verlässt der Abgasmassenstrom den Niedriglastbereich, so wird die Zufuhr von Reduktionsmittel unterbrochen. Auch, dass heißt insbesondere unabhängig davon, wird die Zufuhr von Reduktionsmittel unterbrochen, wenn der Füllstand oberhalb eines Füllstandmaximums liegt. In diesem Fall liegt genügend Reduktionsmittel im Speicher vor, so dass ein optimaler Betrieb der Abgasbehandlungsvorrichtung möglich ist. Ein solches Füllstandsmaximum liegt bei technisch sinnvoller Ausführung der Abgasbehandlungsvorrichtung bei einem Füllstand von etwa 80 % vor. Somit ist die Abgasbehandlungsvorrichtung in der Lage, auch Hochlastbereiche optimal zu behandeln und gleichzeitig wird nicht übermäßig häufig Reduktionsmittel zugeführt.

Diese Abbruchbedingungen gelten insbesondere auch für das Heizen, so dass gerade bei Verlassen des Niedriglastbereichs das Heizen unterbrochen wird.

Insbesondere liegt in einer vorteilhaften Ausführung des Verfahrens der Niedriglastbereich während des Leerlaufs einer abgaserzeugenden Verbrennungskraftmaschine vor. In diesem Betriebszustand liegen niedrige Abgasmassenströme vor, so dass effektiv und energetisch günstig geheizt und/oder der Speicher aufgefüllt werden kann.

Auch in den hier beschriebenen Anwendungsfällen kann ein Niedriglastbereich einer Verbrennungskraftmaschine in der weiter oben beschriebenen Art und Weise durch Betriebsparameter charakterisiert und identifiziert werden. Diese Betriebsparameter sind beispielsweise eine NOx-Rohemission, eine Drehzahl und/oder eine Temperatur in einer Abgasrückführleitung.

In einer weiteren vorteilhaften Ausführung des Verfahrens wird der Niedriglastbereich der Verbrennungskraftmaschine mittels eines Leerlauferkennungsmittels in Schritt b) erkannt.

Ein solches Leerlauferkennungsmittel kann insbesondere ermitteln, welche Drehzahl und/oder wie groß die Kraftstoff-Luft-Befüllung der Zylinder einer Verbrennungskraftmaschine ist, an die die Abgasbehandlungsvorrichtung angeschlossen ist. Liegt in diesem Fall ein Leerlaufzustand der Verbrennungskraftmaschine vor, so wird daraus auf einen Abgasstrom im Niedriglastbereich geschlossen. Daraufhin wird Reduktionsmittel zugeführt. Die Ermittlung eines Leerlaufzustands kann auch über andere Kenngrößen, wie z. B. Vibration der Verbrennungskraftmaschine oder Ergebnisse von bereits vorhandenen Mess- und/oder Berechnungsmittel, in Verbindung mit dem Betrieb der Verbrennungskraftmaschine, genutzt werden.

Eine weiterhin vorteilhafte Ausbildung der Erfindung ist ein Kraftfahrzeug mit einer Verbrennungskraftmaschine und einer Abgasbehandlungsvorrichtung, aufweisend zumindest einen Speicher und zumindest eine Zuführungseinrichtung für ein Reduktionsmittel sowie ein Steuergerät, wobei das Steuergerät zur Durchführung des erfindungsgemäßen Verfahrens eingerichtet ist. Das erfindungsgemäße Verfahren kann bspw. nach Art einer Software in der Motorsteuerung eines Kraftfahrzeugs realisiert sein, welches in entsprechender Weise mit Sensoren kommuniziert und/oder die Zuführungseinrichtung betreibt.

Die Erfindung sowie das technische Umfeld werden nachfolgend anhand der Figuren näher erläutert. Die Figuren zeigen besonders bevorzugte Ausführungsbeispiele, auf die die Erfindung jedoch nicht begrenzt ist. Die Figuren sind schematisch und benennen gleiche Bauteile mit gleichen Bezugszeichen. Es zeigen:
- Fig. 1:: ein Kraftfahrzeug, aufweisend eine Abgasbehandlungsvorrichtung, die für die Durchführung des erfindungsgemäßen Verfahrens eingerichtet ist,
- Fig. 2:: ein weiteres Kraftfahrzeug, aufweisend eine alternative Abgasbehandlungsvorrichtung, die für die Durchführung des erfindungsgemäßen Verfahrens eingerichtet ist,
- Fig. 3:: ein Blockdiagramm, welches den Ablauf des erfindungsgemäßen Verfahrens darstellt,
- Fig. 4:: ein weiteres Blockdiagramm, welches einen weiteren Ablauf des erfindungsgemäßen Verfahrens darstellt, und
- Fig. 5:: ein weiteres Blockdiagramm, welches einen weiteren Ablauf des erfindungsgemäßen Verfahrens darstellt.
- Fig. 6:: ein Diagramm, welches verschiedene Parameter einer Abgasbehandlungsvorrichtung während des Betriebs des erfindungsgemäßen Verfahrens darstellt.

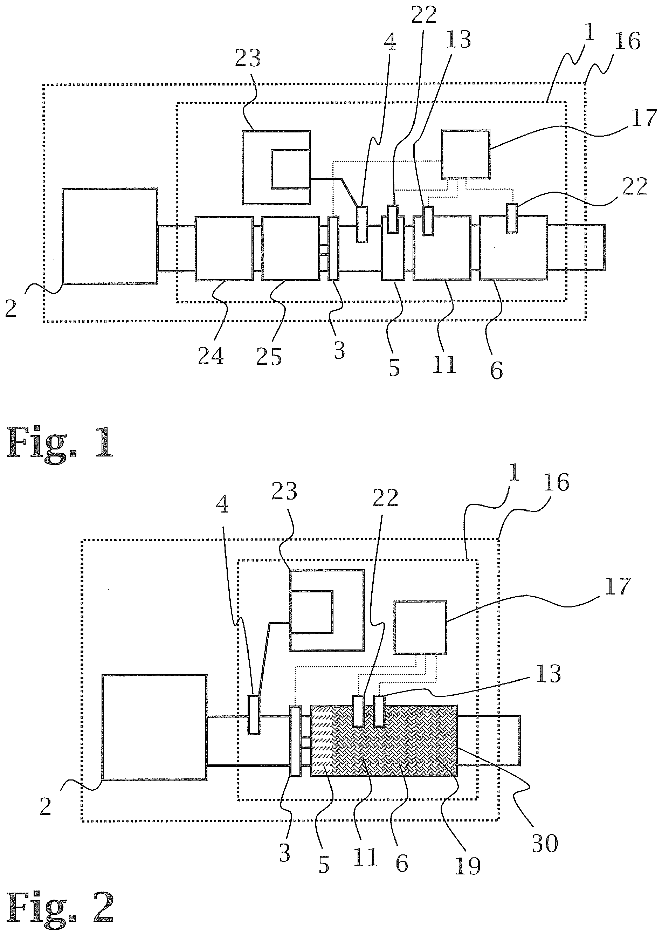

In Fig. 1 ist ein Kraftfahrzeug 16, aufweisend eine Verbrennungskraftmaschine 2 sowie eine an die Verbrennungskraftmaschine 2 angeschlossene Abgasbehandlungsvorrichtung 1 dargestellt. Die Abgasbehandlungsvorrichtung 1 weist hintereinander einen Oxidationskatalysator 24, einen Partikelfilter 25, eine Heizung 3, eine Zufuhreinrichtung 4 für Reduktionsmittel (z. B. Harnstoffwasserlösung), einen Hydrolysekatalysator 5, einen Speicher 11 sowie einen SCR-Katalysator 6 auf. Im SCR-Katalysator 6 ist ein Temperatursensor 22 vorgesehen. Im Hydrolysekatalysator 5 ist ebenfalls ein Temperatursensor 22 vorgesehen. Im Speicher 11 ist ein Stickstoffsensor 13 vorgesehen, mit welchem die Beladung des Speichers 11 mit Reduktionsmittel überwacht werden kann. Die Zufuhreinrichtung 4 wird über eine Leitung aus dem Reduktionsmittel-Dosiersystem 23 mit Reduktionsmittel versorgt. Die Heizung 3 wird in Abhängigkeit der von den Temperatursensoren 22 und dem Stickstoffsensor 13 ermittelten Daten von einem Steuergerät 17 gesteuert. Der Oxidationskatalysator 24 und der Partikelfilter 25 dienen der Vorbehandlung der Abgase der Verbrennungskraftmaschine 2. Gegebenenfalls kann die Zufuhreinrichtung 4 in Abgasströmungsrichtung, ausgehend von der Verbrennungskraftmaschine 2, auch vor dem Partikelfilter 25 und/oder dem Oxidationskatalysator 24, angeordnet sein. Auch die Heizung 3 kann in Abgasströmungsrichtung vor dem Partikelfilter 25 und/oder dem Oxidationskatalysator 24 angeordnet sein.

Fig. 2 zeigt ebenfalls ein Kraftfahrzeug 16, aufweisend eine Verbrennungskraftmaschine 2 sowie eine Abgasbehandlungsvorrichtung 1. In dieser Abgasbehandlungsvorrichtung 1 ist, ausgehend von der Verbrennungskraftmaschine 2, hintereinander zunächst eine Zufuhreinrichtung 4 für ein Reduktionsmittel vorgesehen, die von einem Reduktionsmittel-Dosiersystem 23 mit Reduktionsmittel versorgt wird. Im Anschluss daran sind eine Heizung 3 sowie eine Abgasbehandlungskomponente 30 angeordnet. In der Abgasbehandlungskomponente 30 sind verschiedene Funktionen gemeinsam realisiert. Die Abgasbehandlungskomponente 30 beinhaltet einen Hydrolysekatalysator 5 sowie einen Speicher 11 für ein Reduktionsmittel und einen SCR-Katalysator 6. Der SCR-Katalysator 6 und der Speicher 11 sind in einer gemeinsamen Beschichtung 19 realisiert. Die Beschichtung 19 enthält Reduktionsmittel speichernde Anteile, die den Speicher 11 bilden, sowie die selektive katalytische Reduktion begünstigende Anteile, die den SCR-Katalysator 6 bilden. In der Abgasbehandlungskomponente 30 sind ein Temperatursensor 22 sowie ein Stickstoffsensor 13 vorgesehen. Mit dem Stickstoffsensor 13 kann die Beladung des Speichers 11 mit Reduktionsmittel bestimmt werden. Die Heizung 3 wird von dem Steuergerät 17 in Abhängigkeit der von dem Temperatursensor 22 und dem Stickstoffsensor 13 ermittelten Daten gesteuert.

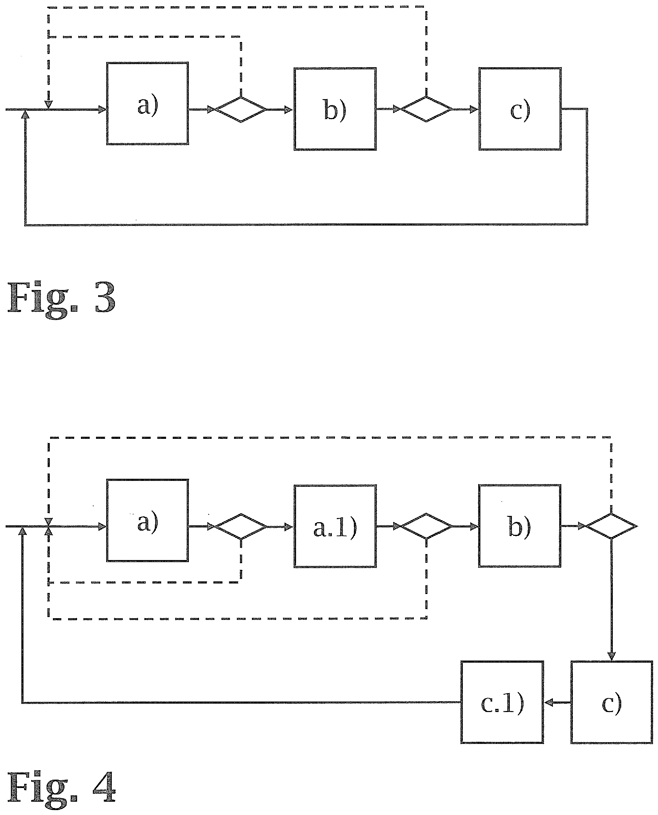

Fig. 3 zeigt ein Ablaufdiagramm des aus dem Stand der Technik bekannten Verfahrens. In Fig. 3 sind die Verfahrensschritte a), b) und c) dargestellt. Es ist auch erkennbar, dass das erfindungsgemäße Verfahren nach Art einer Schleife wiederholt ausgeführt wird. Entsprechend der Feststellung in Schritt a), wie der Füllstand des zumindest einen Speichers aktuell ist, wird Schritt b) ausgeführt oder die Schleife bereits hier zurückgeführt, wenn der Füllstand oberhalb eines Füllstandminimums liegt. Liegt der Füllstand unterhalb eines Füllstandsminimums, so wird in Schritt b) der aktuelle Abgasmassenstrom geprüft. Liegt der Abgasmassenstrom in einem Niedriglastbereich, so wird Schritt c) eingeleitet. Ist dies nicht der Fall, so wird die Schleife wieder zu Schritt a) zurückgeführt. Bei Erfüllung der Bedingungen des Füllstands und des Abgasmassenstroms, wie sie in Schritt c) definiert sind, wird Reduktionsmittel zugeführt. Daraufhin beginnt die Schleife von vorne bei Schritt a).

Fig. 4 unterscheidet sich von Fig. 3 darin, dass die weiteren Verfahrensschritte a.1) und c.1) eingeführt worden sind. In a.1) wird die Abgastemperatur geprüft. In Schritt c.1) wird mit einer Heizung die Abgastemperatur des Abgasstroms oder des Reduktionsmittels angehoben. Wird in Schritt a.1) eine Abgastemperatur oberhalb einer minimalen Grenztemperatur festgestellt, so wird das Verfahren gleichermaßen wie in Fig. 3 für Schritt a) und b) wieder zu Schritt a) zurückgeführt. Liegt die Abgastemperatur unterhalb einer minimalen Grenztemperatur, so wird in Schritt c.1) die Abgastemperatur durch Heizen angehoben. Sobald die Temperatur oberhalb der minimalen Grenztemperatur liegt, wird das Verfahren zurückgeführt zu Schritt a.1).

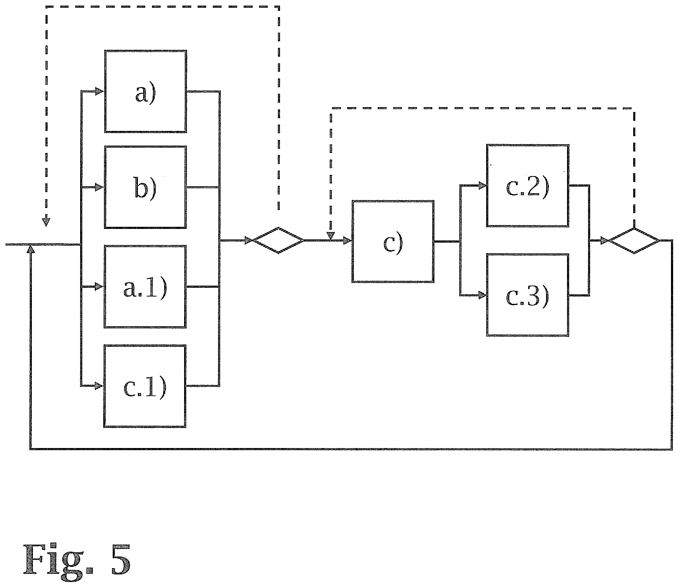

Fig. 5 zeigt ein weiteres Ablaufdiagramm des erfindungsgemäßen Verfahrens. Die Verfahrensschritte a), b), c), a.1), c.1) sind bereits aus den Fig. 3 und 4 bekannt. Der Verfahrensschritt c.2) prüft, ob der Abgasmassenstrom im Niedriglastbereich liegt. Der Verfahrensschritt c.3) prüft, ob der Füllstand des Speichers oberhalb eines Füllstandsmaximums liegt. In dem in Fig. 5 dargestellten Ablaufdiagramm werden die Verfahrensschritte a), b), a.1), c.1) parallel ausgeführt und bei jeweils positivem Ausgang der Grenzwertprüfung wird der Schritt c) eingeleitet. Sobald Schritt c) aktiv ist, werden die Verfahrensschritte c.2) und c.3) parallel ausgeführt. Liegt der Abgasmassenstrom noch immer im Niedriglastbereich und ist der Füllstand noch immer unterhalb eines Füllstandsmaximums, so wird weiterhin Schritt c) ausgeführt. Ist entweder c.2) oder c.3) nicht mehr erfüllt, so wird das parallele Verfahren, bestehend aus den Schritten a), b), a.1 und c.1), ausgeführt und das Verfahren läuft wieder von vorne ab.

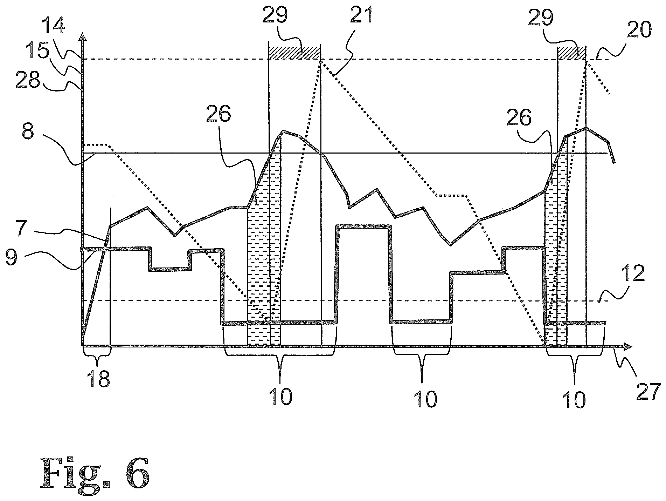

Fig. 6 zeigt ein Diagramm, in welchem verschiedene Betriebsparameter einer Abgasbehandlungsvorrichtung während des Betriebs des erfindungsgemäßen Verfahrens dargestellt sind. Die waagerechte Achse des Diagramms ist hierbei die Zeitachse 27. Die senkrechte Achse hat eine dreifache Funktion: sie dient einerseits als Massenstromachse 14 zur Darstellung des Massenstroms 9 durch die Abgasbehandlungsvorrichtung. Der Massenstrom 9 wird maßgeblich von den Mengen an Kraftstoff und Luft bestimmt, welche in der Verbrennungskraftmaschine, an die die Abgasbehandlungsvorrichtung angeschlossen ist, verbraucht werden.

Darüber hinaus dient die senkrechte Achse als Temperaturachse 28 zur Darstellung einer Temperatur 7 in der Abgasbehandlungsvorrichtung. Über die Zeitachse 27 ist in dem Diagramm zunächst eine Startphase 18 der Abgasbehandlungsvorrichtung dargestellt. In der Startphase 18 ist die Temperatur 7 zunächst noch sehr niedrig und steigt stark an.

Außerdem dient senkrechte Achse als Beladungsachse 15 zur Darstellung der Beladung 21 eines Speichers für ein Reduktionsmittel oder für einen Reduktionsmittelvorläufer. Insbesondere ist hiermit eine Beladung 21 eines Ammoniak-Speicher-Katalysators mit Ammoniak gemeint.

Sobald die Startphase 18 abgeschlossen ist, verbraucht die Abgasbehandlungsvorrichtung Reduktionsmittel, bzw. Ammoniak, welcher in dem Speicher eingelagert ist. Daher sinkt die Beladung 21 des Speichers nach der Startphase 18 zunächst kontinuierlich. In verschiedenen Zeiträumen während des Betriebes der Abgasbehandlungsvorrichtung erfolgt eine Zufuhr 29 von Reduktionsmittel in die Abgasbehandlungsvorrichtung. In diesen Zeiträumen steigt die Beladung 21 des Speichers wieder an. Damit eine Zufuhr 29 von Reduktionsmittel erfolgt, sollten insbesondere folgende drei Bedingungen erfüllt sein:

Als erste Bedingung wird geprüft, ob die Beladung 21 in dem Speicher unter eine Mindestspeichermenge 12 gesunken ist. Als zweite Bedingung wird geprüft, ob der Massenstrom 9 durch die Abgasbehandlungsvorrichtung niedrig ist. Dies ist typischerweise in den im Diagramm markierten Niedriglastphasen 10 der Fall. Die Niedriglastphasen 10 sind vorzugsweise Leerlaufphasen, in denen die an die Abgasbehandlungsvorrichtung angeschlossene Verbrennungskraftmaschine im Leerlauf ist. Als dritte Bedingung wird geprüft, ob die Temperatur 7 in der Abgasbehandlungsvorrichtung größer als eine Grenztemperatur 8 ist, denn nur dann kann das Reduktionsmittel auch erfolgreich in den Speicher eingelagert werden. Wenn zwar die erste und die zweite Bedingung erfüllt sind, die dritte Bedingung allerdings nicht, kann z. B. ein Heizvorgang 26 erfolgen. Hierdurch kann die Temperatur 7 über die Grenztemperatur 8 angehoben werden. Da der Massenstrom 9 während dieses Heizvorgangs 26 besonders niedrig ist, erfolgt die Anhebung der Temperatur 7 durch den Heizvorgang 26 besonders schnell und mit besonders wenig Heizenergie. Sobald durch den Heizvorgang 26 auch die dritte Bedingung erfüllt ist, könnte dann die Zufuhr 29 von Reduktionsmittel erfolgen. Die Zufuhr 29 wird insbesondere dann beendet, wenn die Beladung 21 eine maximale Speichermenge 20 erreicht hat.

Damit löst die Erfindung zumindest teilweise die im Zusammenhang mit dem Stand der Technik geschilderten technischen Probleme. Insbesondere wurde ein Verfahren zum Betrieb einer Abgasbehandlungsvorrichtung angegeben, welches auch bei sehr häufigen Lastwechseln der Verbrennungskraftmaschine eine sichere Umwandlung von Stickoxiden nach dem SCR-Verfahren ermöglicht. Zudem wurde eine besonders effektive und energetisch günstige Zugabestrategie für das Reduktionsmittel angegeben, wobei insbesondere abgasinterne Reduktionsmittelzwischenspeicher mit entsprechend geringem Aufwand mit Reduktionsmittel versorgt werden.

### Bezugszeichenliste

- 1: Abgasbehandlungsvorrichtung
- 2: Verbrennungskraftmaschine
- 3: Heizung
- 4: Zufuhreinrichtung
- 5: Hydrolysekatalysator
- 6: SCR-Katalysator
- 7: Temperatur
- 8: Grenztemperatur
- 9: Massenstrom
- 10: Niedriglastphase
- 11: Speicher
- 12: Mindestspeichermenge
- 13: Stickstoffsensor
- 14: Massenstromachse
- 15: Beladungsachse
- 16: Kraftfahrzeug
- 17: Steuergerät
- 18: Startphase
- 19: Beschichtung
- 20: maximale Speichermenge
- 21: Beladung
- 22: Temperatursensor
- 23: Reduktionsmittel-Dosiersystem
- 24: Oxidationskatalysator
- 25: Partikelfilter
- 26: Heizvorgang
- 27: Zeitachse
- 28: Temperaturachse
- 29: Zufuhr
- 30: Abgasbehandlungskomponente

## Patentansprüche

1. Verfahren zum Betrieb einer Abgasbehandlungsvorrichtung (1) mit zumindest einem Speicher (11) für ein Reduktionsmittel und zumindest einer Zuführungseinrichtung (4) für ein Reduktionsmittel, wobei das Verfahren zumindest die folgenden Schritte umfasst:
a) Prüfen eines Füllstands des zumindest einen Speichers (11);
b) Prüfen eines aktuellen Abgasmassenstroms, wobei geprüft wird, wieviel Abgas aktuell durch die Abgasbehandlungsvorrichtung strömt;
c) Zuführen von Reduktionsmittel nur dann, wenn der Füllstand des zumindest einen Speichers (11) unterhalb eines Füllstandminimums liegt und der in Schritt b) festgestellte Abgasmassenstrom in einem Niedriglastbereich liegt,
**dadurch gekennzeichnet, dass** die Abgasbehandlungsvorrichtung wenigstens eine Heizung (3) aufweist und wobei das Verfahren weiter umfasst:
- Prüfen der Abgastemperatur vor Schritt c);
- Heizen zumindest des Abgasstromes oder des Reduktionsmittels mit der wenigstens einen Heizung (3) vor, während oder nach Schritt c), wenn die Abgastemperatur unterhalb einer minimalen Grenztemperatur liegt und eine Zufuhr von Reduktionsmittel erfolgt.

2. Verfahren nach Patentanspruch 1, wobei vor Schritt c) der in Schritt b) geprüfte aktuelle Abgasmassenstrom mit einem Energiemodell ausgewertet wird, um festzulegen, ob in Schritt c) Reduktionsmittel zugeführt wird.

3. Verfahren nach Patentanspruch 2, wobei in dem Energiemodell eine Energiemenge mit berücksichtigt wird, die aufgrund von zumindest einer chemischen oder physikalischen Reaktion entsteht, wenn eine Menge an Reduktionsmittel zugeführt wird.

4. Verfahren nach einem der vorhergehenden Patentansprüche, wobei das Heizen mit der wenigsten einen Heizung (3) so erfolgt, dass die Abgastemperatur zwischen einer zur Reduktion notwendigen Mindesttemperatur und einer betriebssicheren Höchsttemperatur liegt.

5. Verfahren nach einem der vorhergehenden Patentansprüche, wobei das Reduktionsmittel flüssig zugeführt wird, wenn die Abgastemperatur mindestens gleich der Siedetemperatur des Reduktionsmittels oder höher ist.

6. Verfahren nach einem der vorhergehenden Patentansprüche, wobei das Zuführen von Reduktionsmittel unterbrochen wird, wenn der Abgasmassenstrom nicht mehr im Niedriglastbereich liegt oder der Füllstand des zumindest einen Speichers (11) oberhalb eines Füllstandmaximums liegt.

7. Verfahren nach einem der vorhergehenden Patentansprüche, wobei der Niedriglastbereich beim Leerlauf einer Abgase erzeugenden Verbrennungskraftmaschine (2) vorliegt.

8. Verfahren nach einem der vorhergehenden Patentansprüche, wobei der Niedriglastbereich der Verbrennungskraftmaschine (2) mittels eines Leerlauferkennungsmittels in Schritt b) erkannt wird.

9. Kraftfahrzeug (16) mit einer Verbrennungskraftmaschine (2) und einer Abgasnachbehandlungsvorrichtung (1), aufweisend zumindest einen Speicher (11) für ein Reduktionsmittel und zumindest eine Zuführungseinrichtung (4) für ein Reduktionsmittel sowie ein Steuergerät (17), wobei das Steuergerät (17) zur Durchführung eines Verfahrens nach einem der vorhergehenden Patentansprüche eingerichtet ist.

## Claims

1. Method for operating an exhaust gas treatment device (1) having at least one reservoir (11) for a reducing agent and at least one delivery device (4) for a reducing agent, wherein the method comprises at least the following steps:
a) checking of a filling level of at least the one reservoir (11);
b) checking of a current exhaust gas mass flow, wherein a check is performed as to how much exhaust gas is currently flowing through the exhaust gas treatment device;
c) delivery of reducing agent only if the filling level of at least the one reservoir (11) is below a minimum filling level and the exhaust gas mass flow established in step b) is in a low-load range,
**characterized in that** the exhaust gas treatment device comprises at least one heater (3) and wherein the method further comprises:
- checking of the exhaust gas temperature prior to step c) ;
- heating of at least the exhaust gas flow or the reducing agent with at least the one heater (3) prior to, during or after step c), if the exhaust gas temperature is below a minimum temperature limit and a delivery of reducing agent occurs.

2. Method according to Claim 1, wherein prior to step c), the current exhaust gas mass flow checked in step b) is evaluated by an energy model, in order to determine whether reducing agent is delivered in step c).

3. Method according to Claim 2, wherein account is also taken in the energy model of an amount of energy which is produced by at least one chemical or physical reaction when a quantity of reducing agent is delivered.

4. Method according to one of the proceeding claims, wherein the heating is performed by at least the one heater (3), so that the exhaust gas temperature lies between a minimum temperature necessary for the reduction and a reliable maximum temperature.

5. Method according to one of the preceding claims, wherein the reducing agent is delivered in liquid form, when the exhaust gas temperature is at least equal to the boiling temperature of the reducing agent.

6. Method according to one of the preceding claims, wherein the delivery of reducing agent is interrupted if the exhaust gas mass flow no longer lies in the low-load range or the filling level of at least the one reservoir (11) exceeds a maximum filling level.

7. Method according to one of the preceding claims, wherein the low-load range occurs during the idling of an exhaustgas generating internal combustion engine (2).

8. Method according to one of the preceding claims, wherein the low-load range of the internal combustion engine (2) is detected by means of an idling detection means in step b).

9. Motor vehicle (16) having an internal combustion engine (2) and an exhaust gas treatment device (1), comprising at least one reservoir (11) for a reducing agent and at least one delivery device (4) for a reducing agent together with a control unit (17), wherein the control unit (17) is set up to perform a method according to one of the preceding claims.

## Revendications

1. Procédé de conduite d'un ensemble (1) de traitement des gaz d'échappement qui présente au moins un réservoir (11) pour un agent de réduction et au moins un dispositif (4) d'amenée d'un agent de réduction, le procédé comportant au moins les étapes suivantes :
a) vérification du niveau de remplissage du ou des réservoirs (11),
b) vérification de l'écoulement massique effectif des gaz d'échappement en vérifiant le débit de gaz qui s'écoule à tout instant dans l'ensemble de traitement des gaz d'échappement,
c) apport d'agent de réduction uniquement lorsque le niveau de remplissage du ou des réservoirs (11) est situé en dessous d'un niveau minimum de remplissage et que le débit massique de gaz d'échappement constaté à l'étape b) est situé dans une plage de faible charge,
**caractérisé en ce que**
l'ensemble de traitement des gaz d'échappement présente au moins un dispositif de chauffage (3), le procédé comportant en outre les étapes qui consistent à :
vérifier la température des gaz d'échappement avant l'étape c) et
chauffer au moins l'écoulement des gaz d'échappement ou l'agent de réduction avec au moins un dispositif de chauffage (3) avant, pendant ou après l'étape c) si la température des gaz d'échappement est située en dessous d'une température minimale limite et si un apport d'agent de réduction a lieu.

2. Procédé selon la revendication 1, dans lequel avant l'étape c), le débit massique effectif de gaz d'échappement vérifié à l'étape c) est évalué avec un modèle énergétique pour définir si de l'agent de réduction sera apporté à l'étape c).

3. Procédé selon la revendication 2, dans lequel le modèle énergétique tient compte d'un débit d'énergie qui est dégagé par au moins une réaction chimique ou physique lorsqu'une quantité d'agent de réduction est apportée.

4. Procédé selon l'une des revendications précédentes, dans lequel le chauffage s'effectue avec le ou les dispositifs de chauffage (3) de telle sorte que la température des gaz d'échappement soit située entre une température minimale nécessaire pour la réduction et une température maximale de sécurité de fonctionnement.

5. Procédé selon l'une des revendications précédentes, dans lequel l'agent de réduction est amené sous forme liquide lorsque la température des gaz d'échappement est au moins égale ou supérieure à la température d'ébullition de l'agent de réduction.

6. Procédé selon l'une des revendications précédentes, dans lequel l'apport d'agent de réduction est interrompu si le débit massique des gaz d'échappement ne se trouve plus dans la plage des faibles charges ou si le niveau de remplissage du ou des réservoirs (11) est situé au-dessus d'un niveau maximum de remplissage.

7. Procédé selon l'une des revendications précédentes, dans lequel la plage des faibles charges correspond au fonctionnement à vide d'un moteur (2) à combustion interne produisant des gaz d'échappement.

8. Procédé selon l'une des revendications précédentes, dans lequel la plage des faibles charges du moteur (2) à combustion interne est détectée à l'étape b) au moyen d'un agent de détection du fonctionnement à vide.

9. Véhicule automobile (16) présentant un moteur (2) à combustion interne et un ensemble (1) de traitement des gaz d'échappement qui présente au moins un réservoir (11) pour un agent de réduction et au moins un dispositif (4) d'amenée d'agent de réduction, ainsi qu'un appareil de commande (17), l'appareil de commande (17) étant conçu pour mettre en oeuvre un procédé selon l'une des revendications précédentes.
